# EUROPEAN PATENT APPLICATION

(11) **EP 2 947 817 A1**
(43) Date of publication of application: **25.11.2015**
(21) Application number: 15168774.6
(22) Date of filing: 21.05.2015
(51) Int. Cl.: H04L 12/14, H04M 15/00

(54) **CREDIT CONTROL IN A TELECOMMUNICATIONS NETWORK**

(30) Priority: 22.05.2014 GB 201409153
(71) Applicant: Vodafone IP Licensing Limited, The Connection Newbury Berkshire RG14 2FN (GB)
(72) Inventor: Moughton, John, London, W2 6BY (GB); Awuah, Benjamin, London, W2 6BY (GB); Davies, Rhys, London, W2 6BY (GB)
(74) Representative: Boult Wade Tennant

(57) **Abstract**

A method for facilitating the establishment of a data connection between a first mobile device in a first public land mobile network (PLMN) of a plurality of public land mobile networks (PLMNs) and a destination in a packet data network via centralised infrastructure, the centralised infrastructure comprising a gateway module and a credit control module in communication with the gateway module, the gateway module being in communication with the destination and one or more serving modules of each of the plurality of PLMNs, the credit control module being adapted to generate charging data records for devices in each of the plurality of PLMNs, the method comprising:
receiving, at the gateway module, a connection establishment request for establishing a connection between the first mobile device and the destination;
enabling a connection to be established between the first mobile device and the destination;
monitoring the established connection, and based on the monitoring, maintaining one or more usage states; and
generating, by the credit control module, one or more charging data records associated with the first mobile device based on the monitored usage states and the first PLMN, in which the first device is located.

## Description

### BACKGROUND

In a conventional telecommunications network, charging is performed at the end of each event based on charging data records (CDRs) sent from nodes between a mobile device and a destination.

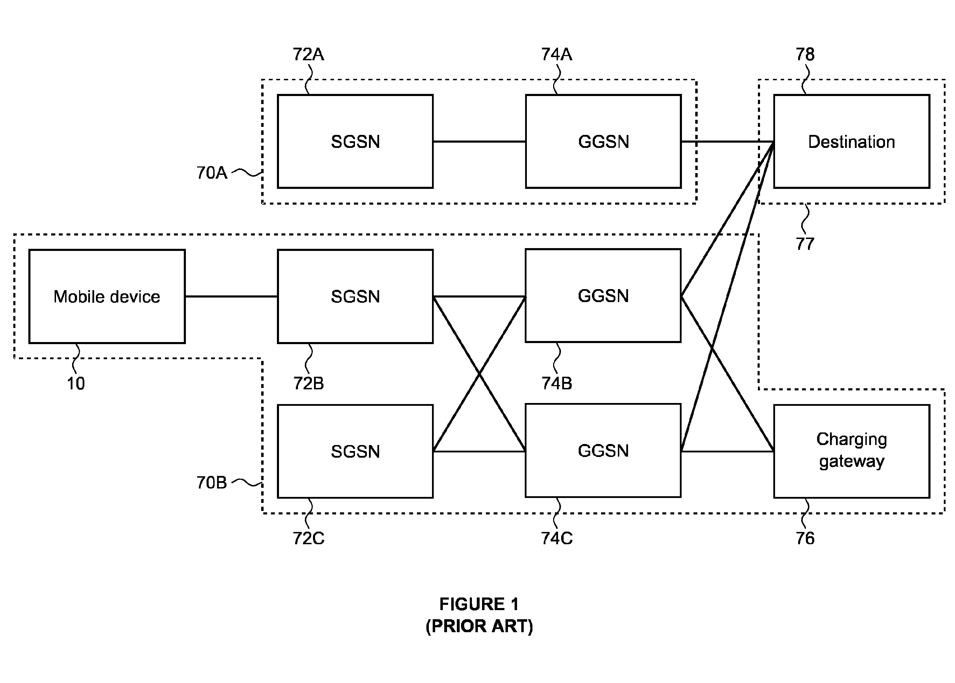

Figure 1 shows an example of a conventional telecommunications system. In this example, the overall network architecture is GPRS. Shown are a first public land mobile network (PLMN) 70A and a second PLMN 70B, both of which are GPRS networks. Further PLMNs may also be present. Each of the PLMNs comprise a number of serving GPRS support nodes (SGSNs) 72A, 72B, 72C, each connected to a number of gateway GPRS support nodes (GGSNs) 74A, 74B, 74C. More or fewer of each may be provided.

Each SGSN in a PLMN is typically provided in its own geographic area. In use a mobile device 10 connects to a local SGSN in the PLMN, typically to an SGSN provided by an operator to which the mobile device 10 is subscribed. Each SGSN is connected to one or more GGSNs within the PLMN. The GGSNs may be located distant from the mobile device and/or the SGSNs. The GGSN and SGSN of a PLMN are comprised in the core part of the network.

A mobile device 10 may switch between SGSNs within the same PLMN. For example, if the mobile device is transported from a geographical area associated with SGSN 72B to a geographical area associated with SGSN 72C, the mobile device 10 switches from SGSN 72B to SGSN 72C. To allow this to occur without impacting performance, session data can be stored at a single GGSN (such as GGSN 74B), and both SGSNs can be configured to use GGSN 74B. This allows the mobile device's session to remain active when switching between SGSNs, and allows the switching between SGSNs to be substantially transparent to the user of the mobile device 10.

Each GGSN 74B, 74C maintains a connection with one or more destinations 78 (such as a server) in an external packet data network (PDN) 77 (such as the Internet). The PDN with which a User Equipment (UE) wishes to make a connection is identified using an Access Point Name (APN). This APN is used by the PLMN to identify which GGSN should be used in the connection path since each PDN is attached to directly to a GGSN.

Each GGSN 74B, 74C can be connected to a charging gateway 76 within its PLMN. In addition, each SGSN 72B, 72C may also be connected to the charging gateway 76. The charging gateway 76 is configured to receive and handle charging data records (CDRs) to enable an account associated with the mobile device 10 to be charged for service usage in the network 70B.

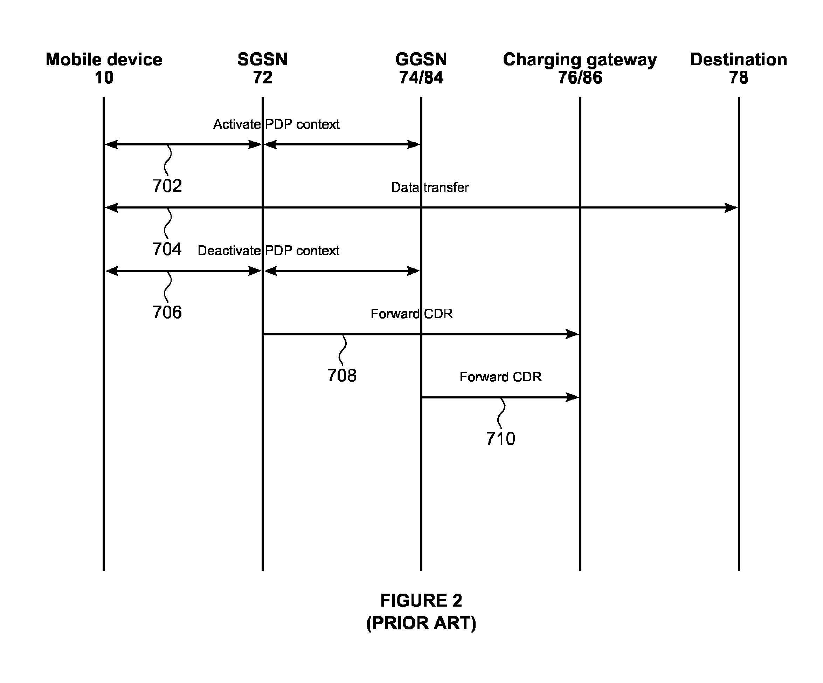

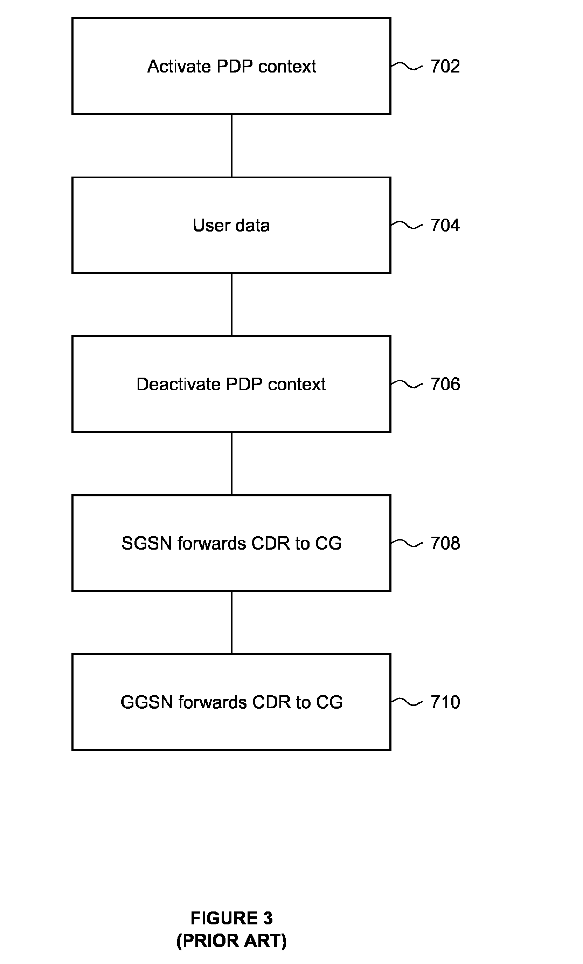

Figures 2 and 3 show an example method for the operation of the conventional wireless data telecommunications network system.

At step 702, a PDP context is activated between the mobile device 10 and the GGSN 74 via SGSN 72. The detail from this step is omitted from the drawings for clarity, but can be found, for example, in 3GPP technical specification 23.060.

At step 704, the mobile device 10 transfers data to and receives data from destination 78. The data is transferred via SGSN 72 and GGSN 74, both of which retain logs related to the amount, quality or duration of the transfers.

At step 706, the PDP context is deactivated. The detail from this step is omitted from the drawings for clarity, but can be found, for example, in 3GPP technical specification 23.060.

At steps 708 and 710, once the PDP context is deactivated, the SGSN and the GGSN prepare CDRs based on their logs of the mobile device's actions, and forwards the CDRs to the charging gateway 78. Although not shown, multiple SGSNs may be involved in a single PDP context. In such a case, each SGSN may send CDRs to the charging gateway 78.

Once the charging gateway 78 receives the CDRs, it can handle the charging appropriately, typically by forwarding the CDRs to a charging system. Where the network 70B is a home PLMN (HPLMN), the charging system can typically directly charge an account associated with the mobile device 10. If the network 70B is a visited PLMN (VPLMN) for the mobile device 10, the charging system may send the relevant information (either as CDRs or as transferred account procedure (TAP) records) to the HPLMN for the mobile device 10. The HPLMN can then appropriately charge the account.

CDRs are typically only generated when a PDP context is deactivated. This means that it is impossible for real-time charging to occur, which is particularly useful where the mobile device 10 is associated with a prepaid account. Because the charging is only performed after the cost in incurred, this may cause the account to be charged for much more than the stored value.

Moreover, CDRs are generated separately within each PLMN. For example, if the mobile device 10 was activated in both PLMN 70A and in PLMN 70B, CDRs would be generated and handled separately. This means that it is difficult to keep track of a user or administer a predetermined policy for usage or the like.

A particular use of the system shown in Figure 1 is with regard to a Multinational Corporate Entity (MCE), such as a company having offices in many different countries. In such cases, the MCE may operate its own network 77, called a Multinational Corporate Data Network (MCDN), to allow its employees to access a common destination (such as a file server or intranet). The MCDN may therefore be accessed by a large number of different mobile devices connected to different PLMNs 70A, 70B operated by respective mobile network operators across different countries or territories. For example, network 70A may be a PLMN operated by a British operator, and network 70B may be a PLMN operated by a French operator.

In use, the MCDN must have a single connection to each GGSN of each PLMN where an employee has a subscription. In practice, for resilience, there may be two GGSNs in each operator's network, each with its own connection to the MCDN. Alternatively, multiple MCDNs may be maintained by the MCE each being connected in each territory. This is inefficient for the MCE.

An approach using multiple connections to a single MCDN introduces a significant burden in terms of configuration and management. For example, it requires configuration for each MCE in each operator's GGSNs and APN DNS server. The APN DNS server operates to route the connections from the SGSN to the GGSN associated with a particular PDN using the APN provided by the UE. Also the MCE's own routers, servers (such as RADIUS or DHCP) and other equipment must be configured with details of each operator's GGSNs. This results in considerable resources and time being required to add a new country to the system. Also, any changes to the GGSNs in any of the operators are visible to the MCE and may result in reconfiguration being needed in the MCDN.

A small improvement to this can be achieved by interconnecting the interfaces of all the operator's GGSNs within a particular operator group and then having a single (resilient) connection from the group network to the MCDN. This could be described as interface or Gi consolidation. However, this consolidation does not simplify any of the configuration issues described above. Also, incompatibilities between the local operators' connectivity solutions may make this solution difficult to achieve.

Another solution is for all the employees of the MCE to be subscribers of only one of the operators in the group. This means that the majority of the employees will be roaming for most of the time, which may cause charging difficulties. Moreover, in this case, it is difficult to provide a localised service to subscribers. For example, customer care in the local language and appropriate charging for voice calls may be more difficult to provide. It is also difficult to provide access to local data services.

It would therefore be desirable to provide a system which could allow for at least near-real-time charging to occur across a plurality of networks. Further, it would be desirable to provide a consolidated, efficient service to multinational entities.

### SUMMARY OF THE INVENTION

According to a first aspect of the invention there is provided a method for facilitating the establishment of a data connection in accordance with claim 1 of the appended claims.

According to the first aspect, there is provided a method in a gateway module in a telecommunications network, the gateway module being in communication with a credit control module.

The gateway module receives a connection establishment request for establishing a connection between a mobile device and a destination. The connection establishment request can indicate the destination by a unique identifier such as an IP address or a URL. The connection establishment request may be a PDP context activation request for use with a GPRS network.

Although the connection establishment request generally originates from the mobile device, it may be transmitted to the gateway module by means of one or more intermediate nodes. For example, one or more serving modules (such as the one or more SGSNs in a GPRS PLMN) can be operable to interface between the gateway module and the mobile device. This is particularly beneficial in a GPRS PLMN, where a connection between an SGSN and the mobile device is transient, depending on the geographic location of the mobile device, however the connection between the user device and the gateway module (which can operate as a GSGN) can be maintained via a plurality of different serving modules.

In response to the connection establishment request, the gateway module may send a credit control request for the mobile device to the credit control module. This step can be performed in order to establish whether the gateway module should allow a connection to be formed between the destination and the mobile device. The credit control request can include an identifier for the mobile device. It can also include information about the network in which the mobile device is located and/or information about the destination.

The gateway module then receives a credit control answer from the credit control module. The credit control answer may be positive or negative. Assuming it is positive (that is, indicating that credit control is allowed for the mobile device), a connection between the mobile device and the destination should be allowed.

The credit control answer may also indicate one or more characteristics of the connection which is to be established. For example, the characteristics can include duration and data volume. The gateway module typically logs the characteristics for each connection, as different connections may have different associated characteristics. The characteristics indicated by the credit control answer enable the gateway module to know what characteristics are relevant for charging purposes. For example, the gateway module may use this information to target its monitoring to only the relevant characteristics, thereby minimising storage and processing requirements.

Subsequently, the gateway module typically sends a connection establishment answer, thereby enabling a connection to be established between the mobile device and the destination. The connection establishment can be sent to the mobile device via any intermediate devices.

Following this step, a connection is established, and data transmission between the mobile device and the destination is enabled. Data can be transmitted via the gateway module and any intermediate nodes (such as one or more serving modules).

In preferred embodiments the credit control answer further indicates a limit for each of the characteristics. For example, a data volume characteristic may have an associated limit of 500 MB or a duration characteristic may have an associated limit of 24 hours. In some cases, the limits may be a complex set of rules. For example, a data volume characteristic may have an associated limit of 100 MB transmitted at high-speed, then 50 MB transmitted at a reduced speed.

The gateway module can then monitor the connection to maintain a state for one or more of the characteristics (and preferably all of the characteristics). In such a case, a Diameter instance may have been established between the gateway module and the credit control module for monitoring the connection between the mobile device and the destination. When data is transferred between the mobile device and the destination, the gateway module can log information about the data relating to the characteristics. This allows the gateway module to maintain an accurate and real-time (or at least near-real-time) record of the state of the characteristics, and more generally, of the data transfer between the mobile device and the destination.

The gateway module preferably compares the state of one or more of the characteristics to the corresponding limit. This can be done periodically (for example every 30 seconds or after every 10 KB is transferred) or in response to one or more predetermined events (for example, any time a packet is transferred). If the state of a characteristic exceeds the corresponding limit, the gateway module sends a credit control update request to the credit control module. The credit control update request includes at least the state of the characteristic which has reached or exceeded its corresponding limit, but may additionally include the state of other characteristics. In this manner, the credit control module can maintain an accurate and real-time (or at least near real-time) record of the state of the characteristics, and more generally, of the data transfer between the mobile device and the destination, even without direct access to the data transmission path. This further allows for data volume and the like to be monitored for analytics, particularly where updates are received relating to a plurality of different connections and different mobile devices.

Additionally or alternatively, credit control update requests can be sent periodically (for example every 120 seconds or after every 500 KB is transferred) or in response to one or more predetermined events (for example, receiving a request from the credit control module for a credit control update request). This may be particularly useful where even if the limits are high (or non-existent), it is desirable for the credit control module to maintain an accurate and real-time (or at least near real-time) record of the state of the characteristics.

In preferred embodiments, when a limit has been reached or exceeded, the credit control update request can be interpreted as a request to extend one or more of the limits. Thus, the gateway module can receive a credit control answer from the credit control module, where the credit control answer comprises a second limit for one or more of the characteristics. The second limit can replace the original limit, such that the gateway module compared the state of one or more of the characteristics to the corresponding second limit. Subsequently, the gateway module can operate in substantially the manner indicated above, such that a third limit can replace a second limit etc. In this manner, the credit control module can be allowed some control over the connection. This may be particularly valuable where there are constraints on charging for a given mobile device, such as where the mobile device is associated with a prepaid account which has only a limited amount of credit available. In such a case, the limits may be set so that the available credit does not drop below 0.

Subsequently, in preferred embodiments, the gateway module receives a connection termination request for terminating the connection between the mobile device and the destination. The connection termination request can originate from the mobile device or from the destination. In some cases, it may alternatively originate from the credit control module (for example, when it is determined that no further limit should be granted). In response, the gateway module sends a credit control termination request to the credit control module. The gateway module then receives a credit control termination answer from the credit control module. Finally, the gateway module sends a connection termination answer to the mobile device, thereby enabling a connection between the mobile device and the destination to be terminated. Consequently, any processes which monitored the connection may also be terminated. This allows for both the gateway module and the credit control module to clean-up the data records for the connection. For example, it may be possible to archive the state of the connection for subsequent reference. In some cases, records may be generated at this stage, and sent to a charging gateway.

There is also provided a method in a credit control module in a telecommunications network, the credit control module being in communication with a gateway module.

The credit control module typically receives a credit control request from the gateway module for a mobile device. The credit control request may also include one or more of an identifier for the destination (such as an IP address), an identifier for the gateway module 32 (such as an APN), or an identifier for the PLMN 20 the mobile device 10 is currently connected with.

The credit control module may then retrieve one or more characteristics to be monitored in a connection for the mobile device. The characteristics may be generic to all mobile devices and connections, or may be based on the specific mobile device.

The credit control module then sends a credit control answer to the gateway module. The credit control answer may be positive or negative. A negative credit control answer may be sent if the credit control module determines that credit control is not suitable for the mobile device. In such a case, the negative credit control answer will typically prevent the establishment of the connection. Alternatively, a positive credit control answer may be sent if the credit control module determines that credit control is suitable for the mobile device. The positive credit control answer indicates the one or more characteristics which were retrieved. The indication may be by means of a series of keywords in the credit control answer. Alternatively, they may be indicated by reference to another source, such as a mutually agreed standard. Subsequently, a connection can be formed between the mobile device and the destination.

This method provides the benefit that credit control can be confirmed before a connection is established. This has benefits across all areas of telecommunications, where it is useful to control the charges incurred by the use of a mobile device. A particular benefit can be seen where the mobile device is associated with a prepaid user account. It is desirable to ensure that the prepaid user account has sufficient credit before allowing a data connection to be formed (and further costs incurred). Moreover, by indicating the relevant characteristics in the credit control answer, the gateway module receives an indication of which characteristics should be monitored. This can reduce the costs associated with data collection, such as excessive processing and storage requirements.

In preferred embodiments, retrieving the one or more characteristics comprises retrieving one or more profiles for the mobile device. The profiles can be stored in a local data store, or may be accessed from an external source. In some cases, there may be a large number of profiles available. Some profiles may be specified for use with a particular mobile device, but others may be specified for use with a group associated with the particular mobile device. A more specific profile may be preferred to a more general one.

The profile can contain a number of rules which set out which characteristics should be monitored in a given situation. For example, a profile may indicate that both connection duration and data volume should be monitored while in a VPLMN, but only data volume should be monitoring while in the HPLMN.

The profile may also contain a number of rules which can be used to generate a limit for each characteristic. For example, in a VPLMN, the data volume limit may be described as 5 units of 100 MB, or in other words, the mobile device will be allowed to use 100 MB at a time and may request 4 extensions of another 100 MB each. In the HPLMN, the data volume limit may be 1 unit of 5 GB.

In this manner, the profile can be used to calculate the one or more characteristics and to calculate a limit for each of the characteristics. This allows for a very granular and customisable mechanism for monitoring and limiting the operation of a mobile device in different situations.

In preferred embodiments, the credit control module receives a credit control update request from the gateway module associated with the mobile device. The credit control module may contain the state of one or more of the characteristics previously indicated by a credit control answer. Typically the credit control update request is only sent when one characteristic has exceeded the corresponding limit. Alternatively or additionally, credit control update request may be sent periodically.

The credit control module can then calculate a second limit for one or more of the characteristics. This may be done based on the relevant profile. A second limit may only be calculated for characteristics where the state of the characteristic has exceeded the associated limit. However in some cases second limits may be generated for additional characteristics. The second limits are typically stored at the credit control module.

Subsequently, the credit control module sends a credit control answer to the gateway module. The credit control answer indicates one or more of the characteristics (typically those which have had a second limit calculated) and comprises a second limit for each of the one or more characteristics. In this manner, the credit control module can maintain an accurate and real-time (or at least near real-time) record of the state of the characteristics, and more generally, of the data transfer between the mobile device and the destination, even without direct access to the data transmission path. Moreover, the credit control module is given control over the operation of the mobile device, allowing service provision to be altered according to a predetermined profile.

In preferred embodiments, the credit control module generates a partial charging data record based on the credit update request and sends the partial charging data record to a charging gateway. The partial charging data record is typically based on the state information provided in the credit control module. The charging gateway may be indicated by the profile associated with the mobile device, and may be associated with an organisation which the user of the mobile device is associated with. This allows for the external organisation to receive regular updates as to the costs incurred by the operation of the mobile device. In some cases, the organisation may then alter the profile for the mobile device based on the partial charging data records.

In preferred embodiments, the credit control module may receive a credit control termination request from the gateway module. The credit control termination request may comprise the state of one or more (preferably all) of the characteristics indicated by the original credit control answer.

Based on the credit control termination request (and preferably based on the state of the characteristics), the credit control module generates a charging data record. The charging data record is then sent to a charging gateway. The charging gateway may be indicated by the profile associated with the mobile device, and may be associated with an organisation which the user of the mobile device is associated with. This allows for the external organisation to promptly receive a final total of the costs incurred by the operation of the mobile device.

Finally, a credit control termination answer is sent to the gateway module. The credit control module can then record the connection as being terminated.

In preferred embodiments, the credit control module sends an authorisation request for the mobile device to an authorisation module. The authorisation request typically comprises at least an identifier for the mobile device. Subsequently, the credit control module receives an authorisation answer from the authorisation module. The authorisation answer may be positive or negative. In the case of a negative authorisation answer, no connection is to be established.

However, assuming the authorisation answer is positive, it includes one or more authorisation limits. For example, an authorisation validity duration. The authorisation is thus regarded as valid until one or more of the limits are exceeded.

In preferred embodiments, the credit control module will periodically assess whether one or more of the limits have been exceeded (and thus, assess whether the authorisation is still valid). If one or more of the authorisation limits have been exceeded, the credit control module will send an authorisation request for the mobile device to the authorisation module, in a manner similar to that described above. Subsequently, the credit control module can receive an authorisation answer, and assuming the authorisation answer is positive, it will comprise one or more second authorisation limits. These can then replace the previous authorisation limits received. In this manner, the credit control module can ensure that the user device is sufficiently authorised to receive credit control.

Although the above discussion is focused upon establishing a connection for a single device, it will be understood that typically the method further comprises facilitating the establishment of data connections between further mobile devices in the plurality of PLMNs and a plurality of further destinations, each via the centralised infrastructure, said centralised infrastructure being in communication with the plurality of further destinations, wherein the credit control module is adapted to generate charging data records based on the monitored usage states of the devices and the respective PLMNS to which said devices are connected. Thus common centralised infrastructure may be used to effect connections between devices in multiple PLMNS and multiple destinations with the CDRs being generated by the same entity or entities across the PLMNs in which the devices reside, with the CDRs themselves being at least specific to the device-PLMN combination.

In accordance with a second aspect there is provided a system in accordance with claim 19. The system is preferably adapted to perform the method of the first aspect. A third aspect of the invention provides a gateway module in accordance with claim 20. A further aspect provides a credit control module in accordance with claim 21. The third and fourth aspects are preferably in accordance with the system of the second aspect.

### BRIEF DESCRIPTION OF FIGURES

Examples of the present invention will now be described with reference to the accompanying drawings, in which:
Figure 1 shows an example of a conventional telecommunications network;
Figure 2 is a sequence diagram showing an example method of operation for the systems shown in Figure 1;
Figure 3 is a flow chart showing the operations performed by the system shown in Figure 1;
Figure 4 shows a system making use of a centralised GGSN in a centralised network;
Figure 5A shows a system according to one embodiment of the present invention;
Figure 5B shows the system of Figure 5A in use in a GPRS network;
Figure 6 is a sequence diagram showing a method of operation for the system shown in Figure 5A or Figure 5B during the establishment of a connection;
Figure 7 is a flow chart showing the method of operation for the gateway module shown in Figure 5A or Figure 5B during the establishment of a connection;
Figure 8 is a flow chart showing the method of operation for the credit control module shown in Figure 5A or Figure 5B during the establishment of a connection;
Figure 9 is a sequence diagram showing a method of operation for the system shown in Figure 5A or Figure 5B during data transmission;
Figure 10 is a flow chart showing the method of operation for the gateway module shown in Figure 5A or Figure 5B during data transmission;
Figure 11A is a flow chart showing an aspect of the method of operation for the credit control module shown in Figure 5A or Figure 5B during data transmission;
Figure 11B is a flow chart showing another aspect of the method of operation for the credit control module shown in Figure 5A or Figure 5B during data transmission;
Figure 12 is a sequence diagram showing a method of operation for the system shown in Figure 5A or Figure 5B during the termination of a connection;
Figure 13 is a flow chart showing the method of operation for the gateway module shown in Figure 5A or Figure 5B during the termination of a connection;
Figure 14 is a flow chart showing the method of operation for the credit control module shown in Figure 5A or Figure 5B during the termination of a connection; and
Figure 15 is a flow chart showing a method of operation for the credit control module for reconciliation of generated charging data records.

### DETAILED DESCRIPTION

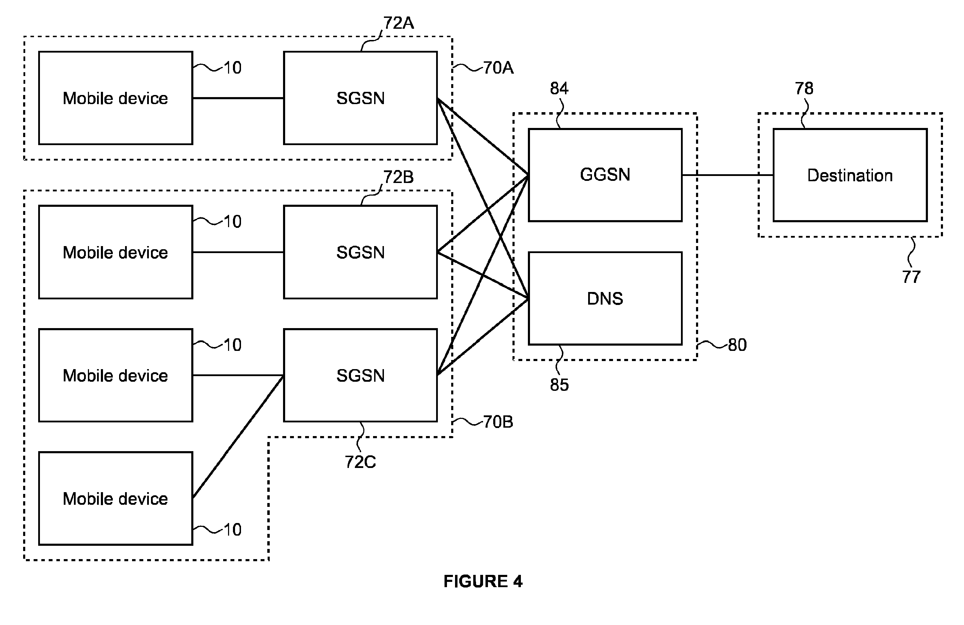

Figure 4 shows an alternative to the system shown in Figure 1 modified for particular use for a Multinational Corporate Entity (MCE). Here, a single GGSN 84 is used by the subscribers (who wish to use the MCN) of all the local operators in the group. The GGSN 84 is shown as part of a central infrastructure 80 which can further include a conventional charging gateway. Although not depicted, each SGSN 72 may also be connected to a conventional charging gateway for their particular network. The GGSN 84 has a single connection to the Multinational Corporate Data Network (MCDN) 77. The GGSN 84 is treated by the subscriber's local operator in the same way as a local GGSN 74, with a normal entry in the operator's DNS server. Each employee of the MNC has a subscription with their respective local network operator thus avoiding the localisation problems of using one operator for all employees. SGSN-based charging and roaming are unaffected since these operate at the local SGSN 72 level which remains unaffected by the proposed modifications.

Each mobile device 10 contains an APN of the MCDN 77. The MCDN 77 is connected to the centralised GGSN 84. Each mobile device 10 may be a subscriber of a different local network operator 70A, 70B. Each mobile device communicates with an SGSN 72A, 72B, 72C of a local PLMN 70A, 70B where it is located. The SGSNs 72A, 72B, 72C may or may not be part of a particular operator group. The SGSN 72 will communicate with a DNS server to identify the location of the centralised GGSN 84. The operator's DNS server (not shown) may be adapted to forward all central GGSN requests to a central DNS server 85 which may be able to resolve the APN to a specific GGSN IP address. A single "wildcard" entry may be entered in the local DNS to match all central APN customers with a single line of configuration. The benefit here is that no local DNS configuration is required per MCE, both in terms of new MCE provisioning or in terms of network operations and maintenance, for example moving an APN from one GGSN to another for capacity reasons.

The DNS server will then return to the SGSN 72 the address of the GGSN 84. The PDP context set up by the local network will terminate at the centralised GGSN 84. Using the APN, the GGSN 84 will set up a communications path between the mobile device 10 and the MCDN 77 for data communication.

The system of Figure 4 can ameliorate some of the limitations of the system of Figure 1, particularly with regard to the overhead associated with configuration. However, it does not address the difficulties caused by charging. In both the system of Figure 1 and the system of Figure 4, charging is done after a transaction has occurred, through the use of CDRs and TAPs. These are administered separately for each operator. This can cause a significant administrative overhead for the MCE in managing the charging for a large number of employees over a large number of different operators in different countries and territories.

In addition, the system of Figure 4 introduces a new problem for the MCE. The CDRs can be generated locally at the centralised GGSN, which can allow for charging a mobile device to be consolidated to some extent. However, these are generated irrespective of the PLMN. Because of this, it is impossible to determine whether a user is roaming, which can have significant downstream effects on charging rates and the like. Generally, it remains necessary to rely on the CDRs generated at the various SGSNs, and to rely on the local per-operator charging approaches used in relation to the system of Figure 1.

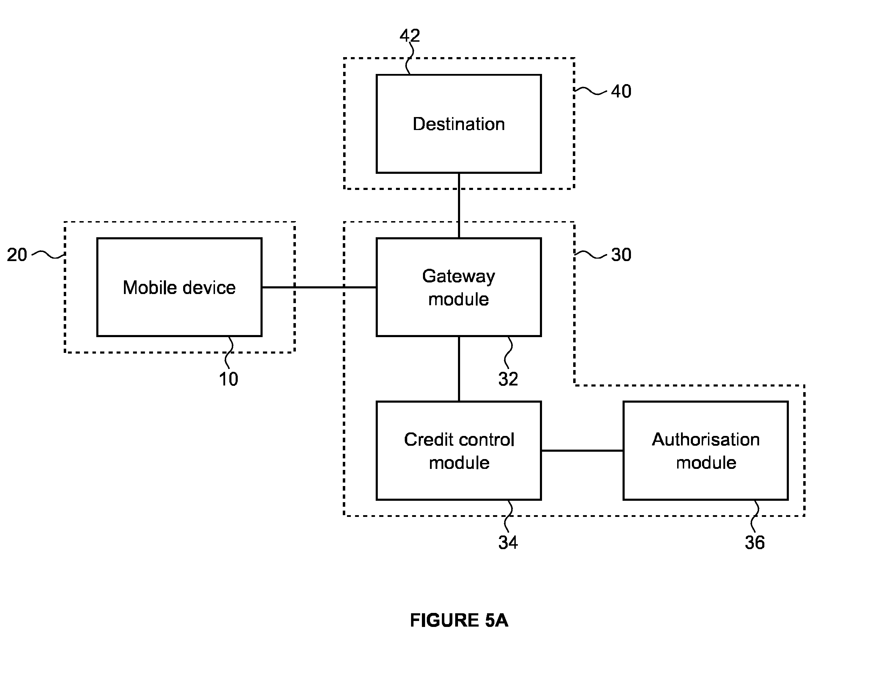

Figure 5A shows a system in accordance with one aspect of the present invention.

A mobile device 10 is provided. The mobile device is typically subscribed to an operator which operates a home PLMN (HPLMN) for the mobile device 10. The operator maintains a user account associated with the mobile device 10 which is used for charging the user of the mobile device 10.

The mobile device 10 is shown in a PLMN 20. The PLMN 20 may be the HPLMN for the mobile device 10, or the mobile device 10 may be roaming in a visited PLMN (VPLMN).

The mobile device 10 is in communication with a gateway module located in a second network 30. The second network 30 may be the same as the PLMN 20, but is preferably separate. In preferred embodiments, the second network is a centralised network in communication with one or more different PLMNs.

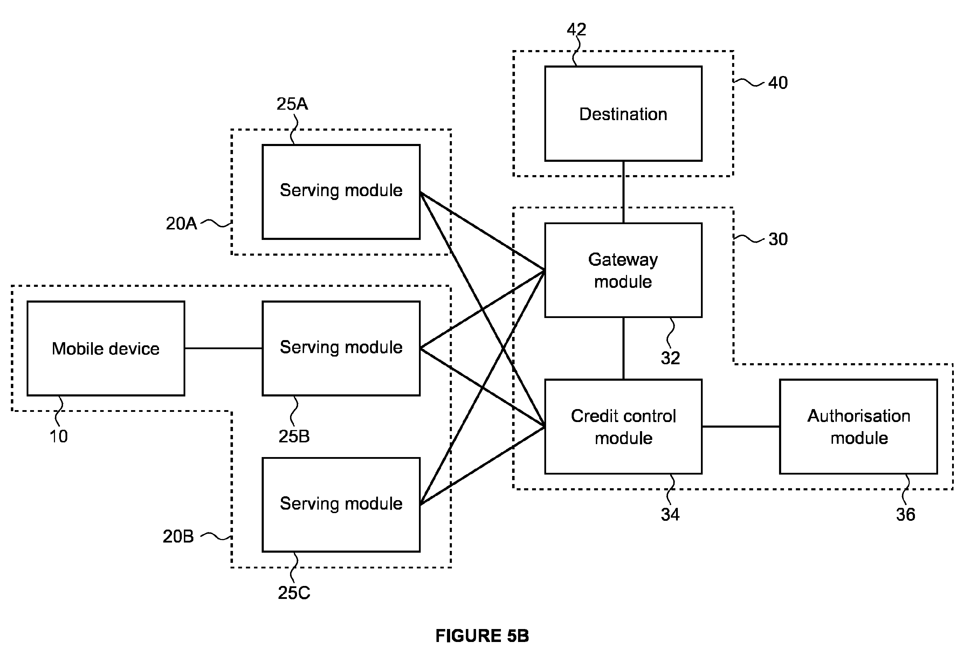

Maintaining the centralised network 30 separate from the PLMN 20 allows user devices in multiple PLMNs to easily communicate with the gateway module 32. Such benefits will be described in more detail below in relation to Figure 5B.

In some cases, intermediate devices may be provided between the mobile device 10 and the gateway module 32, and communication between the mobile device 10 and the gateway module 32 can occur via one or more of the intermediate devices. For example, as will be described below with regard to Figure 5B, a serving module 25 (such as a SGSN) may be provided.

In use, the gateway module 32 may be identified using a unique identifier. For example, an access point name (APN).

The gateway module 32 is shown in communication with destination 42 in network 40, which is preferably a packet data network such as the Internet. For example, destination 42 can be a server provided in the Internet. In practice, the gateway module 32 can be connected to a large number of destinations across a number of different networks. In use, the gateway module 32 is adapted to allow data to be transferred between the mobile device 10 and the destination 42. For example, under a packet switching paradigm, the gateway module 32 can function as a router, routing packets from the mobile device 10 to the destination 42 and vice versa.

A credit control module 84 is provided in communication with the gateway module 32, and an authorisation module 36 is provided in communication with the credit control module 34. The credit control module 34 and the authorisation module 36 are shown as separate modules, they may also be provided integrally. Additionally or alternatively, the gateway module 32, the credit control module 34 and the authorisation module 36 may be located across two or three different networks.

The connection between the gateway module 32 and the credit control module 34 may take the form of a DIAMETER instance, using the protocol defined by IETF RFC 6733 and associated documents. In such a case, the credit control module functions as a Diameter server. The credit control module can support multiple Diameter session control applications concurrently and independently.

Figure 5B demonstrates an embodiment of the system of Figure 5A which is adapted for use with a centralised network 30 which is in communication with one or more different PLMNs 20A, 20B. In this embodiment, serving modules 25A, 25B and 25C (which operate as the SGSN of the GPRS network) are provided. In use, mobile device 10 forms a connection with the destination 42 via one of the serving modules 25B and the gateway module 32. In use, the connection is managed by the gateway module 32. This allows for the mobile device 10 to switch to a different serving module in the same or a different PLMN, while maintaining the same connection.

For the purposes of the clarity of the present description only, the lifecycle of the systems shown in Figure 5A and 5B shall be divided into three stages: establishing the connection, data transmission and terminating the connection.

### Connection establishment

The first stage comprises establishing the connection. As will be appreciated, it is typically necessary for a connection to be established before data transmission can occur in any meaningful way.

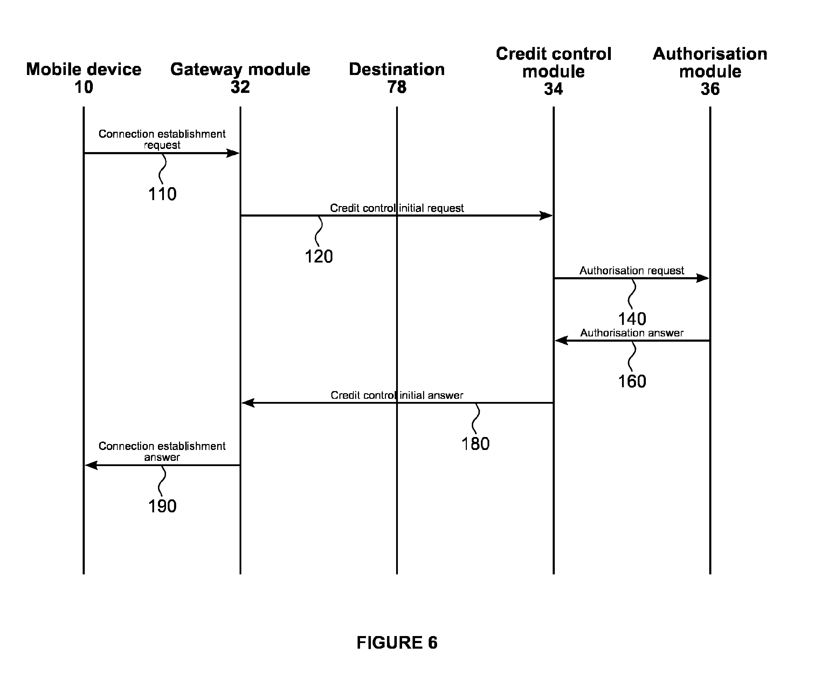

Figure 6 is a sequence diagram showing the various messages that are passed during the establishment of a connection.

At step 110, a connection establishment request is sent from the mobile device 10 to the gateway module 32. Typically the connection establishment request comprises an identifier for the mobile device 10 (such as an MSISDN) and an identifier for the destination (such as an IP address). In some embodiments, a serving module 25 is disposed intermediate the mobile device 10 and the gateway module 32. In such a case, the connection establishment request may originate from the serving module 25. For example, the serving module 25 may comprise an SGSN, and the connection establishment request may be a create PDP context request sent from the SGSN.

At step 120, a credit control initial request is sent from the gateway module 32 to the credit control module 34. The credit control initial request may simply encapsulate the connection establishment request with a new header. In other cases, it is a separate message, which comprises at least an identifier for the mobile device 10 (such as an MSISDN). It may additionally contain one or more of an identifier for the destination (such as an IP address), an identifier for the gateway module 32 (such as an APN), or an identifier for the PLMN 20 the mobile device 10 is currently connected with. In some cases, the credit control initial request may be a credit control initial request as defined by the Diameter protocol.

At step 140, an authorisation request is sent from the credit control module 34 to the authorisation module 36. The authorisation request typically comprises at least an identifier for the mobile device 10 (such as an MSISDN). It may additionally comprise an identifier for the PLMN 20 the mobile device 10 is currently connected with.

At step 160, an authorisation answer is sent from the authorisation module 36. The authorisation answer may be one of two types based on an analysis performed by the authorisation module 36. The analysis typically looks at whether a subscriber of the mobile device 10 is known, whether the subscriber has a valid subscription, and whether an applicable roaming charge has been applied. The analysis may also indicate various authorisation limits which are to be used for limiting the operation for a connection that is established with the mobile device 10. The authorisation limits may include an authorisation expiry time (such as 1 day), so that a further authorisation must be requested when the authorisation expiry time is reached.

If the authorisation answer is positive, it indicates that authorisation has succeeded. A positive authorisation answer typically includes one or more authorisation limits.

If the authorisation answer is negative (which might occur if, for example, the subscriber for the mobile device 10 is not known), it indicates that authorisation has failed and that no connection should be established.

At step 180, a credit control initial answer is sent from the credit control module 34 to the gateway module 32. In some cases, the credit control initial answer may be a credit control answer as defined by the Diameter protocol.

The credit control initial answer may be positive or negative, and is typically based on the authorisation answer type. In the case of a positive credit control initial answer, the credit control initial answer can indicate one or more characteristics for the connection. For example, characteristics can include duration or data volume. In some cases, the credit control initial answer can also comprise a limit corresponding to one or more of the characteristics. For example, for a duration characteristic, a limit can be 24 hours, or for a data volume characteristic, a limit can be 500 MB.

At step 190, a connection establishment answer is sent to the mobile device 10. The connection establishment answer can be either positive or negative.

If the connection establishment answer is positive, a connection is able to be established. This can then proceed according to one of a number of prior art methods, as should be appreciated. For example, a positive connection establishment answer may take the form of a create PDP context response to an SGSN.

If the connection establishment answer is negative, no connection should be established.

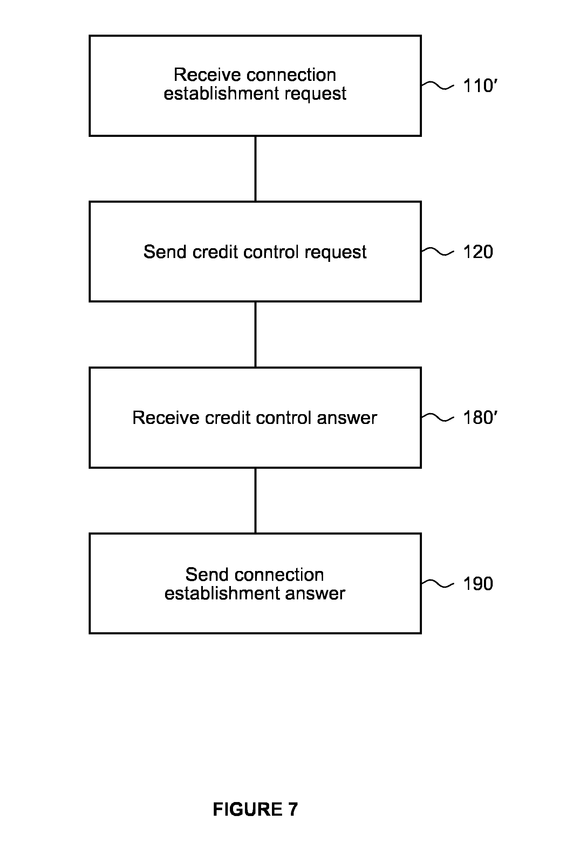

Figure 7 shows a more detailed view of the connection establishment method of Figure 6 as it is performed at the gateway module 32.

The method begins at step 110', where the gateway module receives a connection establishment request. At step 120, based on the information in the connection establishment request, the gateway module generates and sends a credit control request to the credit control module 34.

Subsequently, at step 180', the gateway module receives a credit control answer from the credit control module. In the case of a positive credit control answer, the gateway module may be configured to store the characteristics (and limits, if present) in the credit control answer. The characteristics and limits may be stored in a database or other data store as a triple, comprising the characteristic, the limit and the current state (which will often be zero while the connection is being established).

At step 190, the gateway module 32 sends a connection establishment answer to the mobile device 10, thereby enabling a connection to be formed between the mobile device 10 and the destination 42. In some cases, the gateway module 32 may now establish or enable a connection from the gateway module 32 to the destination 42 and may enable a routing mode such that data intended for the destination 42 may be transmitted from the mobile device 10 to the gateway module 32 and routed by the gateway module 32 to the destination 42.

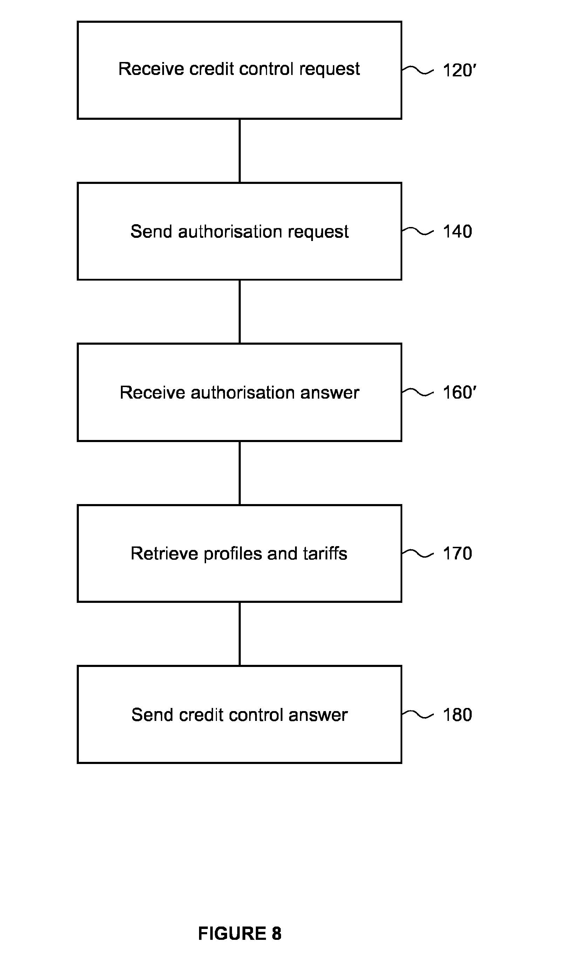

Figure 8 shows a more detailed view of the connection establishment method of Figure 6 as it is performed at the credit control module 34.

At step 120', the credit control module 34 receives a credit control request from the gateway module 32.

In response, at step 140, based on the information in the credit control request, the credit control module 34 generates and sends an authorisation request to the authorisation module 36.

Subsequently, at step 160', the credit control module 34 receives an authorisation answer from the authorisation module 36.

If the authorisation answer is positive, the credit control answer can proceed to step 170. At step 170, the credit control module 34 calculates characteristics of the connection and associated limits for the characteristics.

In some embodiments, the credit control module 34 can retrieve one or more profiles for the connection based on one or more of the mobile device, the PLMN 20, and a group associated with the mobile device. Additionally or alternatively, the credit control module 34 can retrieve tariffs for the connection based on one or more of the mobile device, the PLMN 20, and an HPLMN for the mobile device. The characteristics and the associated limits can then calculated based on the retrieved profiles and/or the retrieved tariffs. It will be appreciated that, in some embodiments, step 170 is skipped.

At step 180, the credit control module 34 generates and sends a credit control answer.

If the authorisation answer is positive, the credit control answer can include one or more characteristics and one or more limits associated with the characteristics. These characteristics and limits may be determined based on the profiles retrieved at step 130.

If the authorisation answer is negative, the credit control answer is typically also negative, so as to prevent a connection being established.

In an alternative embodiment which uses an "offline charging" approach, the authorisation steps 140 and 160 may be omitted. This might be the case when there are no data or duration characteristics requirements, or such characteristics are implemented by the credit control module 34 or gateway module 32. Offline charging may then be implemented using an external charging system to process CDRs and session tickets after termination of the connection so as to allow rating, charging and invoicing for example.

### Data transmission

Once a connection is established between a mobile device 10 and a destination 42, it is usually desired to transmit data between them. Thus the second stage concerns data transmission.

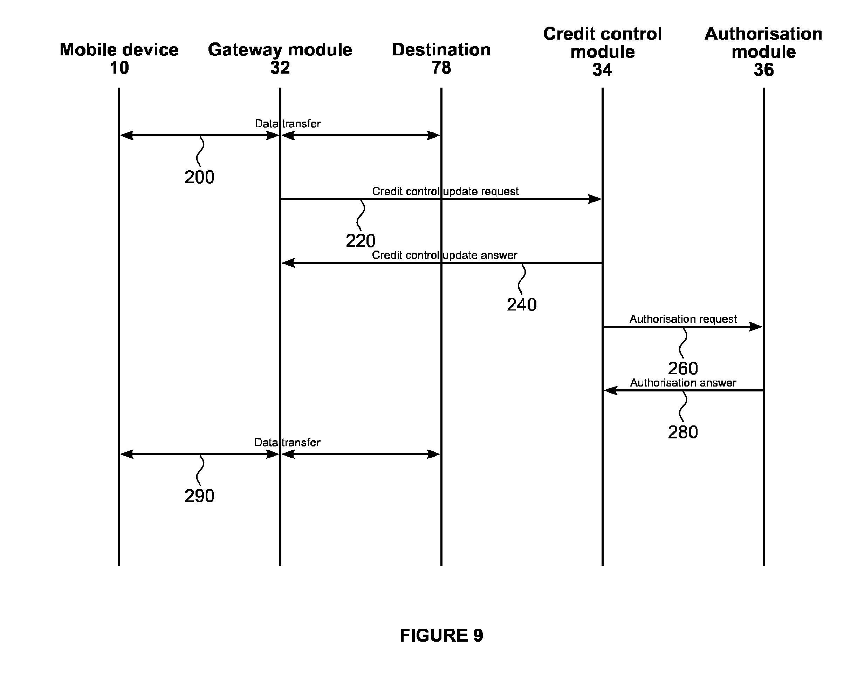

Figure 9 is a sequence diagram showing the various messages that are passed during data transmission, typically over a connection established through the methods shown in Figures 6 to 8.

At step 200, data is transmitted between the mobile device 10 and the destination 42. The data may be transmitted in one or both directions. The data typically flows via the gateway module 32, as well as optionally via one or more intermediate nodes, such as serving module 25. As data is transferred, the gateway module 32 monitors at least some characteristics of the data transfer.

At step 220, the gateway module 32 sends a credit control update request to the credit control module. This may occur periodically or in response to one or more conditions (such as if a limit for a characteristic is exceeded). In some cases, the credit control update request may be a credit control update request as defined by the Diameter protocol.

At step 240, the credit control module 34 sends a credit control update answer to the gateway module 32. The credit control update answer can include a second limit for one or more characteristics of the connection, typically higher than a previous limit for the characteristic. In some cases, the credit control update answer may be a credit control answer as defined by the Diameter protocol.

At step 260, the credit control module 34 sends an authorisation request to the authorisation module 36. Typically, the authorisation request is sent when an authorisation for the mobile device 10 expires, or more generally if authorisation limits are reached or exceeded. The authorisation request can therefore function to request a further authorisation for the mobile device 10.

At step 280, the authorisation module 36 sends an authorisation answer to the credit control module 34. The authorisation answer can typically be positive or negative, depending on whether the further authorisation is granted.

In the case of a positive authorisation answer, the mobile device 10 is authorised to continue transmitting data on the connection. The positive authorisation answer may include one or more further authorisation limits.

In the case of a negative authorisation answer, the mobile device 10 is not authorised to continue transmitting data on the connection. The credit control module 34 may therefore take steps to cause the connected to be terminated, for example sending a connection termination request to the gateway module 32.

It will be appreciated that steps 260 and 280 may be performed before, after or during steps 220 and 240. In one embodiment, step 260 is performed immediately after step 220, and step 240 is performed only after step 280 is completed. This can allow the credit control module 34 to be sure that the mobile device 10 continues to be authorised before a second limit is provided to the gateway module 32. For example, if the authorisation is negative, the credit control answer may not include a second limit for the characteristics which have reached or exceeded a first limit.

In an offline charging embodiment it will be understood that steps 260 and 280 may be omitted altogether.

At 290, data transmission between the mobile device 10 and the destination 42 continues. It will be appreciated that 290 may be a continuation of 200, such that there is no meaningful interruption in service while 220, 240, 260 and 280 occur. Moreover, the method can then restart such that 220, 240, 260 and 280 can occur repeatedly over the data transmission stage.

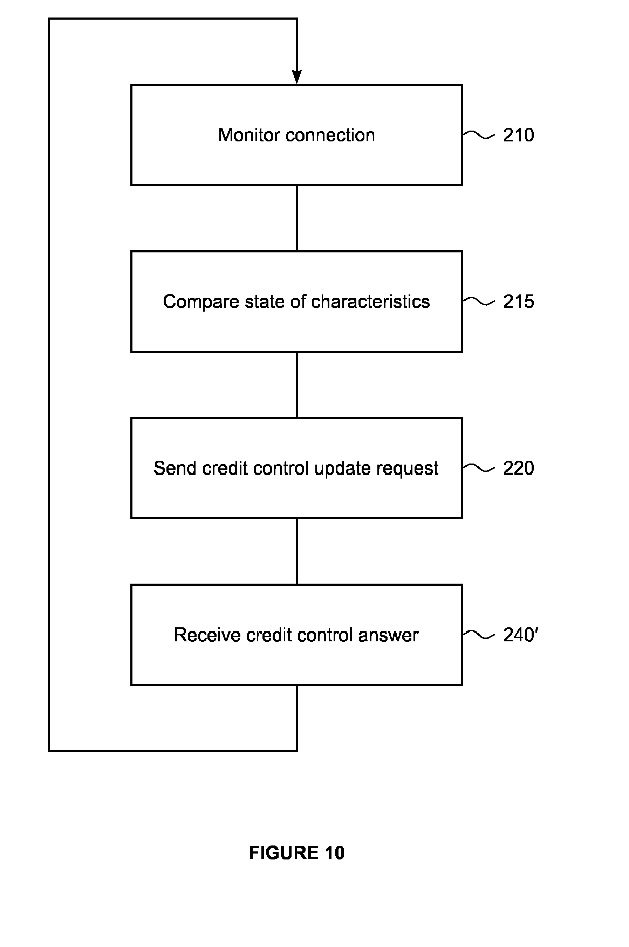

Figure 10 shows a more detailed view of the data transfer method of Figure 9 as it is performed at the gateway module 32.

At step 210, the gateway module 32 monitors the connection between the mobile device 10 and the destination 78. Monitoring in this sense typically comprises recording the state of one or more characteristics of the data and/or the data transfer. The monitored characteristics may be the characteristics indicated by a credit control answer received from the credit control module 34. In many cases, the monitored characteristics include the volume of data, the duration of the data transfer (either from the start of the transfer which includes any time that no data was transferred, or the total duration that data has actually been transferred which excludes any "quiet" periods), the speed of the data transfer, or the duration of the connection.

Where the transfer occurs via the gateway module 32, the gateway module 32 can simply inspect the data flow as it is being routed. Where data is transferred via other means, the gateway module 32 may require a monitoring process to be set up.

In general cases, there is no need to access or inspect the content of the data itself (such as the payload of a packet), as this can lead to increased storage and processing requirements at the gateway module 32. However, in some embodiments, it may be useful to determine a type of data being transferred. For example, data sent using the Post Office Protocol (POP) may be treated differently from data using the Hypertext Transfer Protocol (HTTP).

At step 215, the state of one or more of the monitored characteristics is compared to a limit associated with the characteristic. The limit may be one indicated by a credit control answer received from the credit control module 34. The comparison typically indicates whether each characteristic has reached or exceeded an associated limit. It will be appreciated that step 215 may be omitted in some embodiments.

At step 220, the gateway module 32 sends a credit control update request. Step 220 can occur based on the comparison performed at step 215. For example, if one or more of the monitored characteristics reaches or exceeds a limit associated with that characteristic. Additionally or alternatively, step 220 can be performed periodically (for example every 30 seconds), and/or based on the monitored characteristics (for example, after every 500 KB has been transferred).

The credit control update request can include the state of one or more characteristics monitored by the gateway module 32. The credit control update request may therefore simply function to update the credit control module 34 of the state of the connection (or at least the state of characteristics of the connection).

In some cases, the credit control update request functions to request a second limit for one or more of the characteristics, or at least one or more of the characteristics which have reached or exceeded a corresponding limit. This may be done by explicitly indicating that such characteristics require a second limit in the message, or may be done implicitly by merely providing the state of the characteristics.

At step 240', the gateway module 32 receives a credit control answer from the credit control. In the case of a positive credit control answer, and where the positive credit control answer comprises second limits for one or more monitored characteristics, these may replace limits previously stored at the gateway module 32 for the characteristics. However, in the case of a negative credit control answer, the gateway module 32 may send a message to the mobile device 10 that the connection is to be terminated.

After step 240', typically the gateway module 32 will continue again at step 210. Thus the method shown in Figure 9 may be continually performed by the gateway module 32 for as long as the connection remains established.

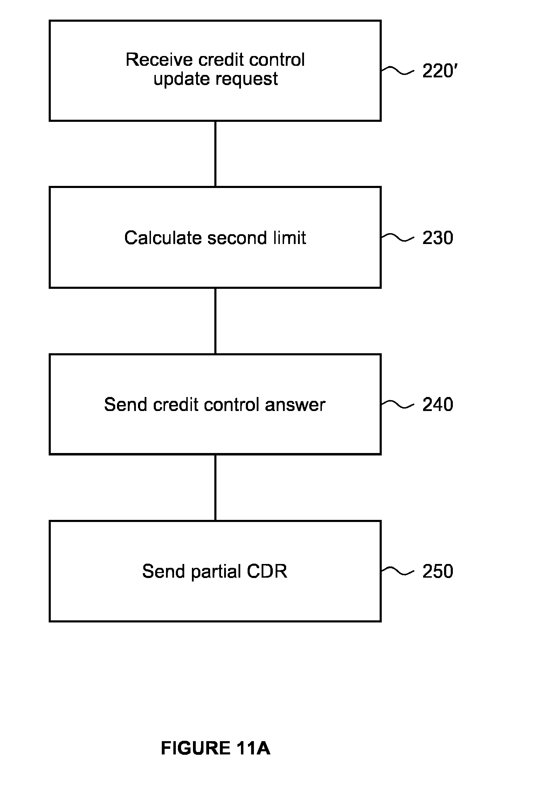

Figure 11A shows a more detailed view of the credit control update portion of the data transfer method of Figure 9 as it is performed at the credit control module 34.

At step 220', the credit control module 34 receives a credit control update request from the gateway module 32. The credit control update request may include the state of one or more characteristics of the connection.

The state of each of the characteristics may be recorded at the credit control module 34. This may replace a previous recording of the state, or may be appended so as to allow a running record.

The credit control module 34 can compare the state of the one or more characteristics with a limit previously calculated for each characteristic. Based on this comparison, the credit control module 34 can calculate whether a second limit is needed. Alternatively or additionally, the credit control update request may explicitly requests a second limit for one or more characteristics.

At step 230, a second limit is calculated for one or more of the characteristics. Each second limit may be calculated based on profiles and/or tariffs retrieved by the credit control module 36.

In some cases, the credit control module 34 may determine that no second limit is appropriate. For example, the current limit for data volume may have already reached a maximum limit prescribed by a profile for the mobile device 10. In such a case, the credit control module 34 may send a message to the gateway module 34 to terminate the connection. Alternatively, the second limit may simply be set to be the same as the current limit.

In some situations, step 230 may be omitted. For example, if the credit control update request does not indicate that a second limit is required, the method may proceed immediately from step 220' to step 240.

At step 240, the credit control module 36 generates and sends a credit control answer to the gateway module 34. The credit control answer can include one or more of the second limits calculated at step 230.

In some embodiments, the method then proceeds to step 250. At step 250, a partial CDR is generated and sent to an appropriate recipient. The CDR is termed a partial CDR because the connection has not yet been terminated. Whether step 250 is performed, the content of the CDR and the appropriate recipient for the partial CDR, can be determined based on a profile for the mobile device 10 and/or the retrieved tariffs for the connection. For example, the profile may indicate that partial CDRs should be generated every 1 hour, and the appropriate recipient is a charging gateway corresponding to a group associated with the mobile device 10. Step 250 may also be performed at any point after step 220', and need not be only performed after step 240.

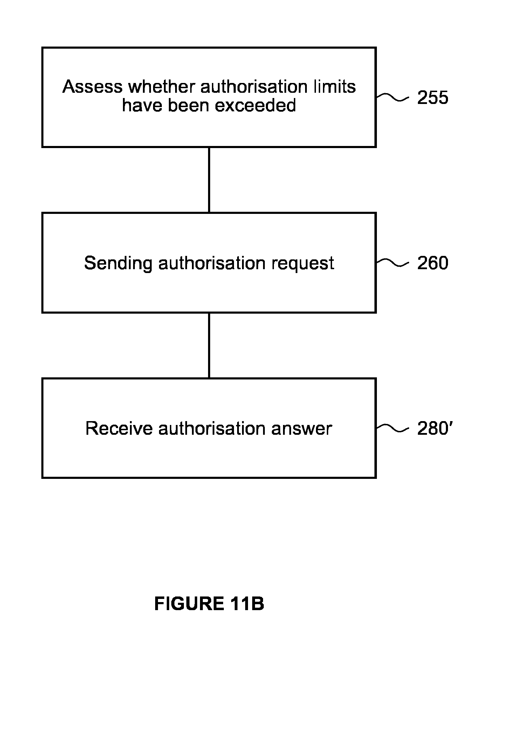

Figure 11B shows a more detailed view of the authorisation portion of the data transfer method of Figure 9 as it is performed at the credit control module 34.

At step 255, the credit control module 34 assesses whether one or more of the authorisation limits have been exceeded. Step 255 may be performed periodically (such as every 1 hour).

In some embodiments, the authorisation limits comprise an authorisation validity duration (for example, the authorisation being valid for 24 hours). When the validity duration passes (that is, the authorisation limit has been exceeded), the authorisation is deemed to have expired.

If the authorisation has expired, the method proceeds to step 260. At step 260, the credit control module 36 sends an authorisation request to the authorisation module 36. The authorisation request functions to request a further authorisation.

At step 280', an authorisation answer is received from the authorisation module 36. In the case of a positive authorisation, the authorisation limits stored at the credit control module 34 may be updated.

In some embodiments, step 255 may be performed after step 220'. Subsequently, step 240 may only be performed if the authorisation answer received at step 280' is positive. Accordingly, there is generally no need for the authorisation to be communicated to the gateway module 32 (or the mobile device 10) explicitly. As has been mentioned, in offline charging embodiments the steps of Figure 11B are not required.

### Connection termination

Ultimately the connection will likely need to be terminated. Thus the third stage is connection termination. In rare cases, termination can occur immediately after the connection is established.

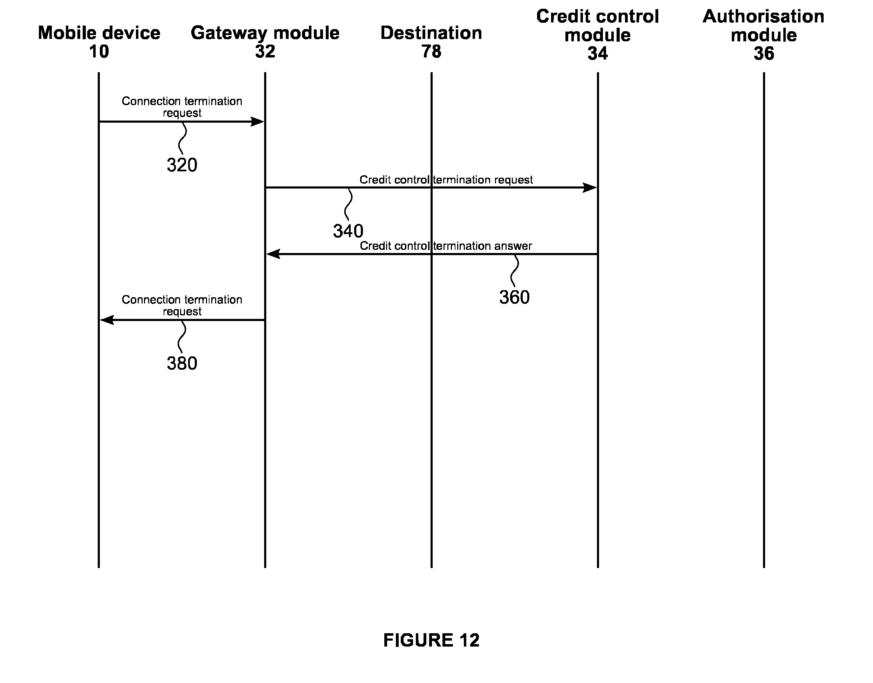

Figure 12 is a sequence diagram showing the various messages that are passed during connection termination, typically over a connection established through the methods shown in Figures 6 to 8.

At step 320, the mobile device sends a connection termination request to the gateway module 32. The connection termination request may be a delete PDP context request. It should be appreciated that, in some situations, the connection termination request may be sent to the gateway module 32 from another entity, such as the credit control module 34 (for example, the credit control module cannot receive an authorisation from the authorisation module 36 for the mobile device 10) or from the destination 78.

At step 340, the gateway module 32 sends a credit control termination request to the credit control module 34. In some cases, the credit control termination request may be a credit control termination request as defined by the Diameter protocol.

At step 360, the credit control module 34 sends a credit control termination answer to the gateway module 32. On receipt of the credit control termination answer, the gateway module 32 may cause any monitoring processes to also be terminated. In some cases, the credit control termination answer may be a credit control answer as defined by the Diameter protocol.

At step 380, the gateway module 32 sends a terminate connection answer to the mobile device 10. From this point, the connection between the mobile device 10 and the destination 42 is deemed to be terminated.

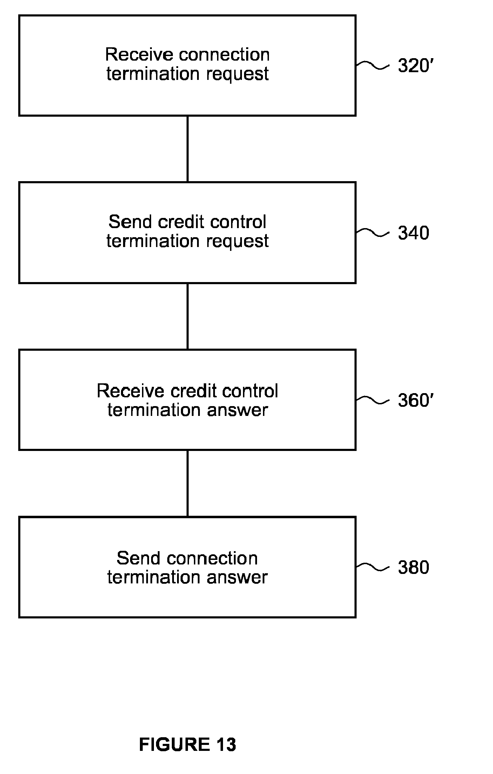

Figure 13 shows a more detailed view of the connection termination method of Figure 12 as it is performed at the gateway module 32.

At step 320', the gateway module 32 receives a connection termination request. The connection termination request can be received from the mobile device 10, the credit control module 34 or the destination 78. In some embodiments, the gateway module 32 may notify the others that the connection termination request has been received.

At step 340, the gateway module 32 sends a credit control termination request to the credit control module 340. The credit control termination request can include the state of characteristics of the connection. Typically, this will include the state for all the characteristics of the connection that are monitored, regardless of whether a corresponding limit has been reached or exceeded.

At step 360', the gateway module 32 receives a credit control termination answer from the credit control module 34.

At step 380, the gateway module 32 sends a credit control termination answer to the mobile device 10 (or additionally or alternatively, to the sender of the credit control termination request). In addition, to the extent that the gateway module 34 has been responsible for establishing the connection between the mobile device 10 and the destination 42, it can now undo the same. Thus, for example if in establishing the connection, the gateway module activates a connection between the gateway module 32 and the destination 42, and has established a routing process to route packets between the mobile device 10 and the destination 42, the gateway module 32 may now terminate the routing process and de-activate the connection between the gateway module 32 and the destination 42.

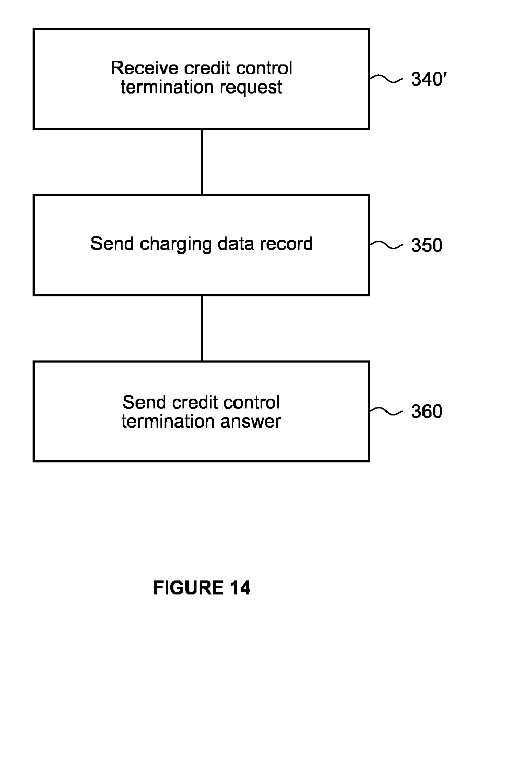

Figure 14 shows a more detailed view of the connection termination method of Figure 12 as it is performed at the credit control module 34.

At step 340', the credit control module 34 receives the credit control termination request, which includes the state of characteristics of the connection.

At step 350, the credit control module 35 generates a CDR based on the state of the characteristics included in the credit control termination request. The CDR can then be sent to an appropriate recipient. The content of the CDR and the appropriate recipient for the CDR can be determined based on a profile for the mobile device 10 and/or the retrieved tariffs for the connection.

In some cases, the credit control module 35 may store the CDR for a period of time before sending it to the recipient. Multiple CDRs may also be consolidated and sent together, for example where the CDRs relate to different mobile devices of the same user.

At step 360, the credit control module 34 sends a credit control termination answer to the gateway module 32. The credit control module 34 may additionally record that the connection between the mobile device 10 and the destination 78 has been terminated.

It will be appreciated that, in some cases, step 350 may be performed after step 360.

The present invention has been described with reference to three stages. This division is not necessarily technical, and has only been used to aid the clarity of the description. It will be appreciated that the three stages will typically occur sequentially, however in some cases the connection may be established then immediately terminated. Moreover, termination may never occur. Accordingly, the present invention comprises each stage separately, as well as in the various combinations of two or three of the stages.

### Reconciliation

As described above, one or more partial CDRs and a final CDR are generated at the credit control module for each connection between a mobile device and a destination. These can then be sent to an appropriate recipient, such as a charging gateway for the PLMN to which the mobile device 10 is subscribed, and these can be sent individually or can be consolidated and sent as one or more batches.

In ordinary use, it is common for the serving modules in each PLMN to also generate one or more CDRs for connections in which they are involved. Once the connection is terminated, these serving-module-generated CDRs (or TAPs in the case of a roaming mobile device 10) can then be transmitted from the serving modules to the credit control module.

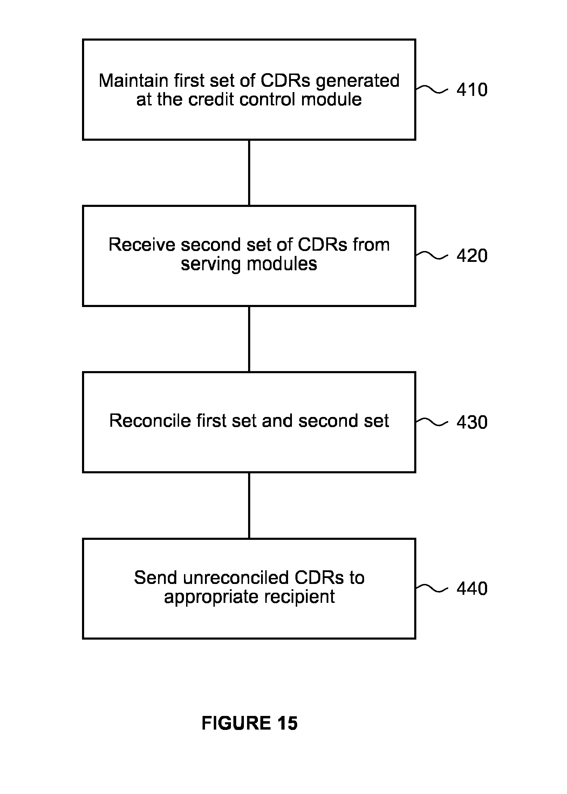

It would be expected that the CDRs generated by the serving modules would match the CDRs received from the credit control module 34, at least insofar as the events in the network which they relate to. If there is any difference between the CDRs from the two sources, it may be indicative of an error in usage monitoring. Thus, the credit control module may perform a method of reconciliation. An exemplary method of reconciliation is shown in Figure 15.

Thus at step 410, a first set of CDRs is maintained. The first set of CDRs comprises those generated by the credit control module 34 at steps 250 and 350 above,

At step 420, a second set of CDRs (or TAPs, as in the case of the first set) is received from one or more serving modules 25. Where the mobile device 10 moves across a plurality of serving modules 25 during a single PDP context, the CDRs in the second set may be received from each of a plurality of serving modules 25 then compiled at the charging gateway to form the second set,

At step 430, the first set of CDRs and the second set of CDRs are compared to determine whether, for each CDR in the second set, there exists one or more substantially corresponding CDRs in the first set. In doing so, the second set can be partitioned into two subsets: a reconciled subset comprising the CDRs in the second set which match CDRs in the first set, and an unreconciled subset comprising the CDRs in the second set which do not match CDRs in the first set.

The reconciled subset will therefore comprise the CDRs which will have already been forwarded to the appropriate recipient (such as the charging gateway for the HPLMN of the mobile device 10). The unreconciled subset will comprise those CDRs which have not been so forwarded, and would therefore not be charged to the user.

At step 440, each CDR in the unreconciled subset is then sent to the appropriate recipient, which can be determined based on the profile for the mobile device 10.

In addition to the functionality described above regarding generation of the first and second sets of CDRs, a gateway module or credit control module may be configured to generate equivalent CDRs to those produced by the serving modules.

The reconciliation process (steps 410 to 440) may be performed at the gateway or credit control module by reconciling CDRs generated centrally with those generated locally. Alternatively all CDRs could be sent to a central reconciliation server where they may be reconciled before or after a bill is generated. The reconciliation server may of course also include rating and billing functionality.

### Multinational Corporate Entities

A specific use of the embodiments described above (and particularly Figure 5B) is in relation to multinational corporate entities (MCE) which have an associated multinational corporate data network (MCDN). For example, with reference to Figure 5B, the packet data network may be a MCDN which is intended to be accessed by a number of employees across a number of the MCE. In this manner, the system of Figure 5B may be seen as an improvement over the system of Figure 4.

More particularly, the gateway module 32 may be configured to be connectable to a plurality of serving modules 25. The serving modules may be spread over a number of different PLMNs in different countries or territories operated by different operators. A mobile device 10 associated with one of the employees of the MCE can then connect to the gateway module 32 via a local serving module 25. In use, a large number of mobile devices can be connected to the gateway module 32 via the various serving modules 25.

In such an embodiment, the MCE will typically be the recipient for charging related to the employees, and may provide a charging portal to act as the recipient of the numerous CDRs and partial CDRs that are generated in use. This provides numerous benefits to the MCE.

Because partial CDRs are generated while a connection is active, these can be forwarded to the charging portal in near-real-time. The MCE may therefore have a near-real-time view of what events are occurring for a given employee. Moreover, the MCE can quickly update profiles for the employee based on the employees' needs.

In addition, because all CDRs and partial CDRs are generated centrally in the centralised network 30, irrespective of the particular serving module 25 or PLMN 20, and because the credit control module 34 is aware of the appropriate tariffs for the user (which may be dependent on whether the user is roaming or the like), the credit control module 34 may consolidate multiple CDRs to be transmitted to the charging portal at once. This could be done on a per-employee basis, for example, by sending all CDRs associated with a single employee periodically, regardless of the one or more PLMNs 20 used by the employee during that period. Additionally or alternatively, the consolidation may take place for a given country or territory, for example by sending all CDRs associated with a single employee periodically. Aside from the clear administrative benefits this brings, the consolidated CDRs will tend to have a smaller total size (due to the potential for combined headers and the like), resulting in an overall faster and less network intensive method.

It will be appreciated that these benefits, though of particular relevance to an MNC, are also present when an individual or non-multinational corporate entity are involved.

## Claims

1. A method for facilitating the establishment of a data connection between a first mobile device in a first public land mobile network (PLMN) of a plurality of public land mobile networks (PLMNs) and a destination in a packet data network via centralised infrastructure, the centralised infrastructure comprising a gateway module and a credit control module in communication with the gateway module, the gateway module being in communication with the destination and one or more serving modules of each of the plurality of PLMNs, the credit control module being adapted to generate charging data records for devices in each of the plurality of PLMNs, the method comprising:
receiving, at the gateway module, a connection establishment request for establishing a connection between the first mobile device and the destination;
enabling a connection to be established between the first mobile device and the destination;
monitoring the established connection, and based on the monitoring, maintaining one or more usage states; and
generating, by the credit control module, one or more charging data records associated with the first mobile device based on the monitored usage states and the first PLMN, in which the first device is located.

2. The method of claim 1, further comprising, prior to enabling a connection to be established:
receiving, at the credit control module, a credit control request for the first mobile device from the gateway module;
in response to receiving the credit control request, calculating one of more usage quotas for the data connection between the first mobile device and the destination; and
sending a credit control answer from the credit control module to the gateway module, the credit control answer providing one of more usage quotas for the connection.

3. The method of claim 2, wherein each usage quota corresponds to one of the monitored usage states.

4. The method of claim 2 or 3, further comprising:
in response to one of the usage states reaching the corresponding usage quota, sending a credit control update request from the gateway module to the credit control module, the credit control update request being based on the monitored usage states; and
receiving, at the credit control module, the credit control update request.

5. The method of claim 4, further comprising:
in response to receiving the credit control update request, calculating, at the credit control module, one or more second usage quotas for the connection, each second usage quota corresponding to one of the monitored usage states; and
sending a credit control answer from the credit control module to the gateway module, the credit control answer providing the one or more second usage quotas for the connection.

6. The method of claim 4 or 5, wherein generating one or more charging data records is performed in response to receiving the credit control update request.

7. The method of any preceding claim, wherein the monitoring is performed by the gateway module.

8. The method of any preceding claim, further comprising:
sending the one or more charging data records to the first PLMN, in which the first device is located.

9. The method of any preceding claim, further comprising facilitating the establishment of data connections between further mobile devices in the plurality of PLMNs and a plurality of further destinations, each via the centralised infrastructure, said centralised infrastructure being in communication with the plurality of further destinations, wherein the credit control module is adapted to generate charging data records based on the monitored usage states of the devices and the respective PLMNs to which said devices are connected.

10. The method of any preceding claim, further comprising:
generating, by the credit control module, one or more charging data records associated with a second mobile device in a second PLMN based on the monitored usage state corresponding to one or more usage quotas for a data connection associated with the second mobile device;
consolidating the one or more charging data records associated with the first mobile device and the one or more charging data records associated with a second mobile device to generate a charging data record file; and
sending the charging data record file to a charging gateway.

11. The method of claim 10, wherein the first mobile device, the second mobile device and the charging gateway are associated with a single corporate entity.

12. The method of claim 11, wherein the destination is associated with the corporate entity.

13. The method of any preceding claim, wherein generating one or more charging data records comprises:
calculating a roaming state for the first mobile device, the roaming state indicating if the first mobile device is roaming in the first PLMN;
calculating a charge based on the roaming state and the usage state for one or more of the usage quotas; and
generating the one or more charging data records based on the calculated charge.

14. The method of any preceding claim, further comprising:
receiving, at the gateway module, a connection termination request for terminating the connection between the first mobile device and the destination;
in response to receiving the connection termination request, sending a credit control termination request from the gateway module to the credit control module;
receiving, at the credit control module, a credit control termination request from the gateway module;
generating, at the credit control module, a charging data record based on the credit control termination request;
sending the charging data record from the credit control module to a charging gateway; and
sending a credit control termination answer from the credit control module to the gateway module;
receiving, at the gateway module, the credit control termination answer;
and
in response to receiving the credit control termination answer, sending a connection termination answer from the gateway module, thereby enabling a connection between the first mobile device and the destination to be terminated.

15. The method of claim 14, further comprising:
receiving one or more charging data records from serving modules in one or more PLMNs; and
reconciling the one or more received charging data records with the generated charging data records.

16. The method of claim 15, wherein reconciling comprises:
comparing each of the received charging data records with the generated charging data records; and
based on the comparison, generating a subset comprising each received charging data record which does not correspond to one or more of the generated charging data records.

17. The method of claim 16, further comprising:
sending each charging data record in the subset to a charging gateway.

18. The method of any of claims 15 to 17, wherein said step of reconciling is performed at the credit control module or a reconciliation server.

19. A system for facilitating the establishment of a data connection between a first mobile device in a first public land mobile network (PLMN) of a plurality of public land mobile networks (PLMNs) and a destination in a packet data network, the system comprising:
a gateway module; and
a credit control module in communication with the gateway module, the credit control module being adapted to generate charging data records for devices in each of the plurality of PLMNs;
the gateway module being in communication with a destination in a packet data network and one or more serving modules of each of the plurality of PLMNs;
wherein the gateway module is configured to:
receive a connection establishment request for establishing a connection between the first mobile device and the destination;
enable a connection to be established between the first mobile device and the destination; and
monitor the established connection to maintain one or more usage states;
wherein the credit control module is configured to:
generate one or more charging data records associated with the first mobile device based on the monitored usage states and the first PLMN, in which the first device is located.

20. A gateway module for use in a system for facilitating the establishment of a data connection between a first mobile device in a first public land mobile network (PLMN) of a plurality of public land mobile networks (PLMNs) and a destination in a packet data network, the gateway module being in communication with the destination and one or more serving modules of each of the plurality of PLMNs, the gateway module being further in communication with a credit control module in the system, the credit control module being adapted to generate charging data records for devices in each of the plurality of PLMNs, the gateway module being configured to:
receive a connection establishment request for establishing a connection between the first mobile device and the destination;
enable a connection to be established between the first mobile device and the destination; and
monitor the established connection to maintain one or more usage states.

21. A credit control module for use in a system for facilitating the establishment of a data connection between a first mobile device in a first public land mobile network (PLMN) of a plurality of public land mobile networks (PLMNs) and a destination in a packet data network, the credit control module being adapted to generate charging data records for, devices in each of the plurality of PLMNs and being configured to:
generate one or more charging data records associated with the first mobile device based on monitored usage states and the first PLMN, in which the first device is located.
